Europäisches Patentamt

European Patent Office

Office européen des brevets

(11) Publication number : **0 640 625 A2**

## (12) EUROPEAN PATENT APPLICATION

(21) Application number : 94306302.4

(22) Date of filing : 26.08.94

(51) Int. Cl.$^6$ : **C08F 4/69,** C08F 10/00

(30) Priority : 27.08.93 US 113615

(43) Date of publication of application :
01.03.95 Bulletin 95/09

(84) Designated Contracting States :
AT BE CH DE DK ES FR GB GR IE IT LI LU MC
NL PT SE

(71) Applicant : **UNION CARBIDE CHEMICALS &
PLASTICS TECHNOLOGY CORPORATION
39 Old Ridgebury Road
Danbury, Connecticut 06817-0001 (US)**

(72) Inventor : **Levine, Isaac Jacob
43 Surrey Drive
Belle Mead, New Jersey 08502 (US)**

Inventor : **Manders, Peter William
141 Center Street
Clinton, New Jersey 08809 (US)**
Inventor : **Fishberg, Lewis David
101 North 2nd Avenue
Highland Park, New Jersey 08904 (US)**
Inventor : **Song, Susan Marie Wickliffe
75 Almond Drive
Somerset, New Jersey 08873 (US)**
Inventor : **Williams, Clark Curtis
1105 Skytop Circle
Charleston, W. Virginia 25314 (US)**
Inventor : **Martino, Carlos Francis
125 River Road
Somerville, New Jersey 08876 (US)**
Inventor : **Michie, William James Jr.
14 Obert Drive
Raritan, New Jersey 08869 (US)**

(74) Representative : **Allard, Susan Joyce et al
BOULT, WADE & TENNANT
27 Furnival Street
London EC4A 1PQ (GB)**

(54) Improved method and catalyst for producing polymers for blow molding applications.

(57) A catalyst and method for producing olefin polymers having high MFR and reduced die swell for use in blow molding applications is provided. The polymers are produced by fluidized bed polymerization of ethylene and optionally one or more alpha olefins at elevated temperatures in the presence of a spherical or microspherical, supported chromium-titanium catalyst having a refractory oxide support material that has at least 70% of its pore volume in the pore size range of about 200 to 500 Angstroms, which supported catalyst has been activated at a temperature ranging from about 850°C to the sintering temperature of the supported catalyst.

EP 0 640 625 A2

## BACKGROUND OF THE INVENTION

### Field of the Invention

The present invention is directed to a chromium-titanium compound-containing catalyst for polymerizing ethylene and optionally one or more alpha-olefins, also known as a 1-olefins, to a method for producing such a catalyst, and to a method of polymerizing ethylene and optionally such alpha-olefins. More particularly, the invention is directed to a method of producing polymers of ethylene or copolymers of ethylene and one or more alpha-olefins at higher temperatures than was heretofore possible, which polymers are useful in the fabrication of blow molding products.

### Description of the Prior Art

Fabricators of blow molding products such as household and industrial containers (i.e., plastic food bottles for milk, juice, and water; chemical bottles for detergent and motor oil; and heavy-duty storage drums) set performance and appearance standards for their products. These fabricators also require that the blow molding products be formed by existing commercial equipment and blow molding processing techniques with no or minimal equipment modifications or lengthening of the work cycle necessary to fabricate a blow molding product.

Polymers for use in blow molding products, accordingly, are provided within these constraints established by the fabricators of blow molding products. Acceptable polymers for blow molding generally must exhibit good melt strength, no melt fracture, and die swell within the constraints of customer's equipment. Polymers having a relatively broad molecular weight distribution (MWD), as evidenced by relatively high values of melt flow ratio (MFR) usually exhibit one or more of these properties. In general, MFR values can range in value from 60 to 130. Since MFR is the measurement of flow index of the polymer divided by the melt index of the polymer, ranges in value of MFR differ depending on whether the polymer is a homopolymer or copolymer, the flow index value, and type of blow molding product (milk bottle, detergent bottle, drum, etc.). Accordingly, typical MFR values for blow molding products are as follows:

| TYPE | POLYMER | FLOW INDEX* | MFR RANGE |
|---|---|---|---|
| Food bottle | Homopolymer | 50 | 60-90 |
| Chemical bottle | Copolymer | 15-45 | 70-100 |
| Drum | Copolymer | 2-18 | 80-130 |

---

* MFR values for other flow indices can be determined by dividing the flow index ($I_{21}$) by melt index ($I_2$).

Meeting die swell requirements when producing a blow molding product is also critical. If the swell is too high, the bottle cannot be trimmed using existing commercial equipment. If the die swell is too low, side handles are not formed. Unfortunately, the chromium (or "chrome") catalyzed polymers used to produce blow molded articles often exhibit or possess high swell properties and require post-polymerization processing to meet commercial swell requirements.

The term die swell as used herein refers to the expansion of a free form parison (or annular tube of molten plastic) upon exit from any die geometry (convergent, divergent, straight, etc.) after having been delivered under pressure to the die by means of a conventional plasticating extruder. This expansion of the free form parison occurs in two dimensions, i.e., radially to increase the thickness of the parison and circumferentially to increase the diameter of the parison. The radial swell correlates with the circumferential swell for each class of blow molding resins. Radial swell is generally measured by comparing bottle weights under controlled conditions. Circumferential swell, which takes more time to determine, is usually measured by comparing the width of the trim on the bottle. Since radial swell correlates with circumferential swell for each class of blow molding resins, bottle weight, which is a simpler and more reproducible test, is generally used to measure and control die swell during resin manufacture.

Polymers of ethylene or copolymers of ethylene and one or more higher alpha-olefins, preferably $C_3$-$C_8$ alpha-olefins, which are useful for blow molding applications are typically produced in a fluidized bed reactor in the presence of a supported chromium-titanium catalyst by a low temperature polymerization process such as that described in U. S. Patent No. 5,096,868. In this process, the polymerization reaction is conducted at relatively low temperatures of less than about 108°C (usually 102°C to 105°C), which temperature is substantially below the polymer resin product sintering temperature particularly for resins having densities of 0.952 to 0.962. A useful catalyst for the polymerization reaction is a supported chromium-titanium catalyst which is substantially non-spherical or irregular shaped and has a broad particle size distribution with at least 75% of its pore volume ranging in pore size from 200 to 500 Angstroms. Polymerization reactions conducted at lower temperatures typically yield a polymer product having acceptably high values of MFR.

It is desirable to conduct the polymerization of olefin polymers at higher temperatures. Such temperatures approach the melting or sintering temperature of the polymer resin product (i.e., temperatures of about 110° to 115°C). Polymerizing polymers useful in blow molding applications at higher temperatures is desirable because it is more cost efficient since it affords an increased rate of productivity as a result of increased catalytic activity. The die swell of the polymer is also reduced. However, in contrast to low temperature polymerizations, polymerization reactions conducted at higher temperatures typically yield a polymer product having an undesirable narrow molecular weight distribution as evidenced by low values of MFR (less than about 60). Narrow molecular weight distribution evidenced by low MFR values usually indicates unacceptable melt fracture and melt strength for blow molding applications and higher processing temperatures (longer cycles).

Accordingly, there is an on-going need to provide polymers produced at higher polymerization temperatures, which polymers have high values of MFR (i.e., a MFR value greater than about 60, and preferably the MFR value is 70 to 100) and low or reduced die swell (i.e., within the commercially acceptable die swell range). Being able to obtain low bottle weights, for example, as low as 65 grams, with high MFR's provides the most manufacturing latitude for optimizing production rates and gives the resin supplier the capability for meeting the full range of die swell requirements of the many types of machines and applications in customers' plants.

SUMMARY OF THE INVENTION

The present invention meets such on-going need by providing a substantially spherical catalyst useful for olefin polymerization which comprises a catalytically active chromium-titanium complex supported on refractory oxide material in which at least seventy (70%) of the total pore volume of such material ranges from about 200 to about 500 Angstroms, which supported complex has been activated by heating in the presence of oxygen at a temperature varying from about 850°C to the sintering temperature of the supported complex.

In another embodiment there is provided a method of preparing a substantially spherical catalyst useful for the polymerization of olefins which comprises:

(a) depositing a chromium compound and a titanium compound on a refractory oxide support material having at least 70% of its pore volume in the pore size range of about 200 to about 500 Angstrom diameter;

(b) activating the product of step (a) in the presence of oxygen at a temperature ranging from about 850°C to the sintering temperature of the supported catalyst for up to 6 hours. Such catalyst produces a polymer having a high melt flow ratio and reduced die swell properties (i.e., within the desired die swell ranges for the various blow molding machines and applications).

Still another embodiment provides a method for producing olefin polymers which comprises reacting ethylene and optionally one or more higher alpha-olefins in the presence of a substantially spherical catalyst useful for olefin polymerization which comprises a catalytically active chromium-titanium complex supported on refractory oxide material in which at least seventy percent (70%) of the total pore volume of such material ranges from about 200 to about 500 Angstroms, which supported complex has been activated by heating in the presence of oxygen at a temperature ranging from about 850°C to the sintering temperature of the supported complex.

BRIEF DESCRIPTION OF THE DRAWING

The drawing shows a schematic representation of a fluid bed reactor system in which the method and catalyst of the present invention can be employed.

DETAILED DESCRIPTION OF THE INVENTION

Homopolymers and Copolymers.

The method and catalyst of the present can be used to polymerize either ethylene alone to prepare a homopolymer or to polymerize ethylene in conjunction with one or more higher monomers, preferably $C_3$ to $C_8$ alpha-

olefin monomers, to prepare a copolymer. The method and catalyst of the present invention can be used to prepare copolymers comprising a major mole percent ( at least about 85 percent) of ethylene, and a minor mole percent (about 15 percent) of one or more $C_3$ to $C_8$ alpha-olefins. These alpha olefins are preferably selected from the group consisting of propylene, butene-1, pentene-1, hexene-1, and octene-1. Most preferably the polymers are made from ethylene and hexene-1.

The plolyethylene polymers range in density from about 0.915 to 0.965 g/cc. The density of the polymer, at a given melt index level for the polymer, is primarily regulated by the amount of the $C_3$ to $C_8$ comonomer which is copolymerized with the ethylene. In the absence of the comonomer, the ethylene would homopolymerize with the catalyst of the present invention to provide homopolymers having a density of about 0.960 g/cc or greater. Thus, the addition of progressively larger amounts of the comonomers to the polymers results in a progressive lowering, in approximately a linear relationship, of the density of the polymer. The amount of each of the various $C_3$ to $C_8$ comonomers needed to achieve the same result will vary from monomer to monomer, under the same reaction conditions.

Thus, to achieve the same results, in terms of a given density, at a given melt index level, larger molar amounts of the comonomers would be needed in the order of $C_3>C_4>C_5>C_6>C_8$.

The melt index or flow index of a polymer is a reflection of its molecular weight. Polymers having a relatively high molecular weight, have a relatively low melt index or flow index.

The polymers made by the method of the present invention have a residual catalyst content, in terms of parts per million of chromium metal, of the order of less than about 10 parts per million, and preferably of the order of less than about 3 parts per million. This catalyst residue content is primarily a function of the productivity of the catalyst.

The polymers of the present invention have an average particle size of the order of about 120μm to about 1500μm, and preferably of about 250μm to about 600μm. The particle size is important for readily fluidizing the polymer particles in a fluid bed reactor, as described herein.

In the most preferred embodiment, the catalyst and method of the present invention are used to polymerize 1-hexene and ethylene in a fluid bed process to obtain a polymer resin product having a density of 0.945 g/cc to 0.965 g/cc and MFR value of 70 to 100.

Activated Supported Catalyst.

The catalyst employed in the process of the present invention is a chromium oxide ($CrO_3$) based catalyst. Preferably, the catalyst is comprised of a chromium-titanium complex supported on refractory oxide material. The chromium compounds which can be used in the complex include $CrO_3$, or any compound of chromium which is ignitable to $CrO_3$ under the activation conditions set forth herein. Chromium compounds other than $CrO_3$ which can be used are disclosed in U.S. Patent Nos. 2,825,721 and 3,622,521 which are incorporated by reference herein. Chromium compounds other than $CrO_3$ can include, for example, chromic acetyl acetonate, chromic nitrate, chromic acetate, chromic chloride, chromic sulfate, and ammonium chromate. Water soluble compounds of chromium, such as $CrO_3$ are the preferred compounds for use in the catalyst. However, organic solvent soluble chromium compounds can also be used. At least a portion of the chromium in the supported, activated catalyst must be in the hexavalent state after activation. Preferably, the amount of chromium in the hexavalent state in the activated catalyst ranges from about 0.10 to 0.50 weight percent calculated as Cr metal.

The titanium compounds which can be used in the complex include all those which are ignitable to $TiO_2$ under the activation conditions employed, and include those disclosed in U.S. Patent No. 3,622,521 which is hereby incorporated by reference. These compounds include those having the structures $X_nTi(OR')_m$ and $(RO)_mTi(OR')_n$ where $\underline{m}$ is 1, 2, 3, or 4; $\underline{n}$ is 0, 1, 2, or 3 and m+n = 4, and $TiX_4$ where R is a $C_1$ to $C_{12}$ alkyl, aryl or cycloalkyl group, and combinations thereof, such as aralkyl, alkaryl, and the like; R' is R, cyclopentadienyl, and $C_2$ to $C_{12}$ alkenyl groups, such as ethenyl, propenyl, isopropenyl, butenyl and the like; and X is chlorine, bromine, fluorine, or iodine. The titanium compounds would thus include titanium tetrachloride, titanium tetraisopropoxide and titanium tetrabutoxide. The titanium compounds are more conveniently deposited on the catalyst support from a hydrocarbon solvent solution thereof. The amount of titanium in the activated catalyst ranges from about 3 to 5 weight percent, preferably about 3.5 to 4.5 weight percent (calculated as Ti metal).

Inorganic oxide materials which can be used as a support in the catalyst compositions of the present invention are porous materials having a high surface area, that is a surface area in the range of about 50 to about 1000 square meters per gram, and a particle size of about 10 to 200 microns (μm). The inorganic oxides which can be used as the refractory oxide support material include silica, alumina, thoria, zirconia and other comparable inorganic oxides, as well as mixtures of such oxides. Of these refractory oxide materials, silica is the preferred support material. Additionally, the refractory oxide support material preferably has at least 70% of its pore volume above 200 Angstroms diameter. Preferably at least 75% of its pore volume is in the pore size range of about 200 to about 500 Angstrom diameter.

The catalyst of the present invention is substantially spherical (which term encompasses microspherical shaped) in shape to promote fluidization. Accordingly, the silica support which is employed in the present invention should have a particle size distribution within the range of from 2 microns to no more than 80 microns, and should have an average particle size of from 20 to 50 microns. Preferably such silica support has a particle size distribution of from 5 to no more than 65 microns, and an average particle size of from 25 to 45 microns. A preferred support for the present invention is spherical and/or microspheroidal intermediate density (MSID) silica having a surface area of 200 to 500 square meters per gram, with at least about 75 percent of the pores having diameters of about 200 Angstroms or greater, and an average particle size of about 40 microns, (about 0.0016 inches) available commercially from Davison Corporation, a subsidiary of W.R. Grace, in Baltimore, Maryland as Silica Gel Davison Grade 956.

Chromium and titanium compounds are usually deposited on the inorganic oxide support from solutions thereof and in such quantities as to provide, after the activation step, the desired levels of Cr and Ti in the catalyst. The order of addition of the chromium compound and the titanium compound to the support is not critical provided that all of the compounds are added before the activation of the composite catalyst. Preferably, the support can be dried before the titanium compound is added thereto. This is normally done by simply heating or pre-drying the catalyst support with a dry inert gas or dry air prior to use. It has been found that the temperature of drying has an appreciable effect on the molecular weight distribution and the melt index of the polymer produced. The preferred drying temperature ranges from about 100°C to 300°C for a period of time ranging from about 2 to 5 hours. After the compounds are placed on the support, the support containing the Cr and Ti compounds is activated. In general, activation of the supported catalyst may be accomplished at nearly any temperature up to about its sintering temperature. Typically, activation temperatures ranging from about 300°C to 900°C for up to 20 hours can be employed. Activation of the supported catalyst is accomplished by the passage of a stream of dry air or oxygen through the supported catalyst to aid in the displacement of water from the support. In the present invention activation is conducted in the presence of an oxygen-containing gas, preferably air, at a temperature ranging from about 850°C to the sintering temperature of the supported catalyst. Preferably, the catalyst is activated at a temperature ranging from about 855°C to about 900°C, and most preferably, activation is conducted at a temperature ranging from about 860°C to 880°C for a time period of up to 6 hours, preferably 2 to 6 hours, and most preferably 4 to 6 hours. After the compounds are placed on the support and it is activated, there results a powdery, free-flowing particulate material. About 0.001 to 1 weight percent of the composite catalyst is employed per pound of polymer produced.

After activation of the support catalyst, it contains , based upon the weight of the support and the chromium and titanium therein, about 0.15 to 0.40 and preferably 0.2 to 0.4 weight percent of chromium in the hexavalent state (calculated as Cr). The amount titanium (calculated as Ti) in the catalyst after activation is about 1.5 to 9.0, preferably about 2.5 to 7.0 weight percent based upon the weight of the support and the chromium and titanium therein.

When incorporated in a porous support of high surface area, as described in this invention, the chromium forms active sites on the surface and in the pores of the support. Although the actual mechanism of the process is not entirely understood, it is believed that the polymers begin to grow at the surface as well as in the pores of the supported catalyst. When a pore grown polymer becomes large enough in the fluidized bed, it ruptures the support thereby exposing fresh catalyst sites in the inner pores of the support. The supported catalyst may thus subdivide many times during its lifetime in the fluidized bed and thereby enhance the production of low catalyst residue polymers, thereby eliminating the need for recovering the catalyst from the polymer particles. If the support is too large, it can resist rupture thereby preventing subdivision which would result in catalyst waste. In addition, a large support can act as a heat sink and cause "hot spots" to form.

The Polymerization Reaction.

After the activated catalyst has been formed, the copolymerization reaction is conducted by contacting a stream of ethylene and one or more comonomers, in a fluid bed reactor as described below, and substantially in the absence of catalyst poisons such as moisture, oxygen, carbon monoxide, carbon dioxide and acetylene, with a catalytically effective amount of the catalyst at a temperature and a pressure sufficient to initiate the polymerization reaction. It is extremely critical that the poisons be essentially eliminated since only minor amounts (i.e. $\leqq 2$ ppm of carbon monoxide in the recycle gas) have been found to dramatically, adversely affect the polymerization.

In order to achieve the desired density ranges in the copolymers, it is necessary to copolymerize enough of the $\geqq C_3$ monomers with ethylene to achieve a level of 0.05 to 8 mol percent of the $C_3$ to $C_8$ comonomer in

the copolymer. The amount of comonomer needed to achieve this result will depend on the particular comonomer(s) being employed. Further, the various intended comonomers have different reactivity rates, relative to the reactivity rate of ethylene, with respect to the copolymerization thereof with the catalysts of the present invention. Therefore, the amount of comonomer used in the stream of monomers fed to the reactor will also vary depending on the reactivity of the comonomer.

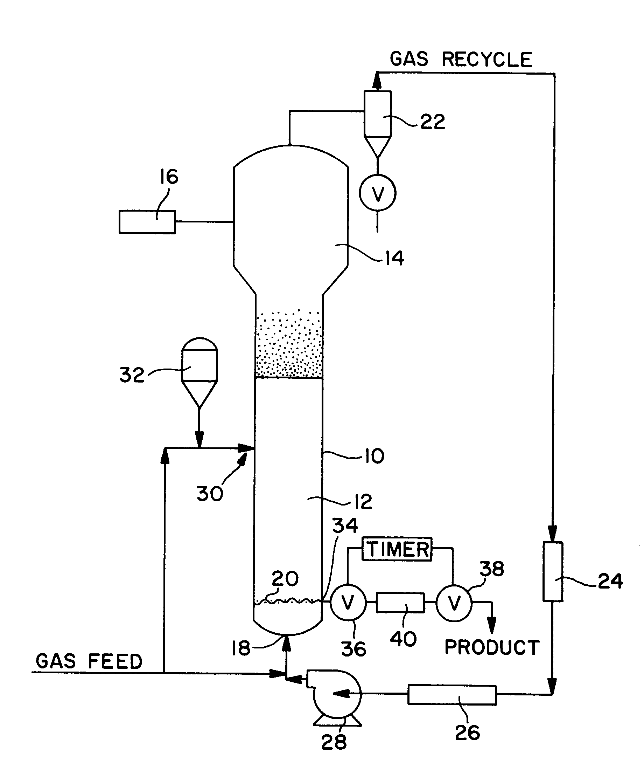

A fluidized bed reaction system which can be used in the practice of the process of the present invention is illustrated in Fig. 1. With reference thereto the reactor 10 consists of a reaction zone 12 and a velocity reduction zone 14.

The reaction zone 12 comprises a bed of growing polymer particles, formed polymer particles and a minor amount of catalyst fluidized by the continuous flow of polymerizable and modifying gaseous components in the form of make-up feed and recycle gas through the reaction zone. To maintain a viable fluidized bed, mass gas flow through the bed must be above the minimum flow required for fluidization, preferably from about 1.5 to about 10 times Gmf and more preferably from about 3 to 6 times $G_{mf}$. $G_{mf}$ is used in the accepted form as the abbreviation for the minimum mass gas flow required to achieve fluidization. C.Y. Wen and Y.H. Yu, "Mechanics of Fluidization", Chemical Engineering Progress Symposium Series, Vol. 62, p. 100-111 (1966).

It is essential that the bed always contains particles to prevent the formation of localized "hot spots" and to entrap and distribute the powdery catalyst throughout the reaction zone. On start up, the reaction zone is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired particles supplants the start-up bed.

The supported catalyst used in the fluidized bed is preferably stored for service in a reservoir 32 under a nitrogen blanket.

Fluidization is achieved by a high rate of gas recycle to and through the bed, typically in the order of about 50 times the rate of feed of make-up gas. The fluidized bed has the general appearance of a dense mass of viable particles in possibly free-vortex flow as created by the percolation of gas through the bed. The pressure drop through the bed is equal to or slightly, greater than the mass of the bed divided by the cross-sectional area.

Make-up gas is fed to the bed at a rate equal to the rate at which particulate polymer product is withdrawn. The composition of the make up gas is determined by a gas analyzer 16 positioned above the bed. The gas analyzer determines component deficiency in the gas being recycled and the composition of the make-up gas is adjusted accordingly to maintain an essentially steady state gaseous composition within the reaction zone.

To insure complete fluidization, the recycle gas and, where desired, part of the make-up gas are returned to the reactor at point 18 below the bed. There exists a gas distribution plate 20 above the point of return to aid fluidizing the bed.

The portion of the gas stream which does not react in the bed constitutes the recycle gas which is removed from the polymerization zone, preferably by passing it into a velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is then passed through a heat exchanger 26 wherein it is stripped of heat of reaction before it is returned to the bed. By constantly removing heat of reaction, no noticeable temperature gradient appears to exist within the upper portion of the bed. A temperature gradient will exist in the bottom 6 to 12 inches (15.2 to 20.5 cm) of bed, between the temperature of the inlet gas and the temperature of the remainder of the bed. Thus it has been observed that the bed acts to almost immediately adjust the temperature of the recycle gas above this lower 6 to 12 inch bed zone to make it conform to the temperature of the bed thereby maintaining itself at an essentially constant temperature under steady state conditions. The recycle is then compressed in a compressor 28 and returned to the reactor at its base 18 and to the fluidized bed through distribution plate 20. The compressor 28 can also be placed upstream of the heat exchanger 26.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type and the like. The elements of the plate may all be stationary, or the plate may be of the mobile type disclosed in U.S. Pat. No. 3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction of the present invention in amounts varying between about 0.001 to about 10 moles of hydrogen per mole of ethylene and comonomer.

Also, as desired for temperature control of the system, any gas inert to the catalyst and reactants can also be present in the gas stream.

In the present invention the polymerization process is carried out in the fluid bed reactor at a temperature over 108°C. Preferably, temperatures of about 110°C to 112°C are used to prepare products having a density of about 0.945 to 0.965 g/cc (homopolymer). Preferablly, product prepared at temperatures of about 110°C to 112°C have a density of about 0.952 to 0.965 g/cc.

The fluid bed reactor is operated at pressures of up to about 1000 psi (6894 kPa) and is preferably operated at a pressure of from about 150 to 350 psi (1034 to 2413 kPa) with operation at the higher pressures in such ranges favoring heat transfer since an increase in pressure increases the unit volume heat capacity of the gas.

It is also an important aspect of the invention that at a constant reactor pressure variations in ethylene partial pressure will have an effect on the productivity of the catalyst and on the rate of the reaction. Thus the ethylene partial pressure should be controlled within the range of about 125 to about 300 psi (862 to about 2068 kPa) with a preferred range of about 150 to about 250 psi (1034 to about 1723 kPa).

The catalyst is injected into the bed at a rate equal to its consumption at a point 30 which is above the distribution plate 20. Preferably, the catalyst is injected at a point located about 1/4 to 3/4 up the side of the bed. Injecting the catalyst at a point above the distribution plate is an important feature of the polymerization process. Since the catalysts used in the practice of the invention are highly active, injection into the area below the distribution plate may cause polymerization to begin there and eventually cause plugging of the distribution plate. Injection into the viable bed, instead, aids in distributing the catalyst throughout the bed and tends to preclude the formation of localized spots of high catalyst concentration which may result in the formation of "hot spots".

Inert gas such as nitrogen is used to carry the catalyst into the bed.

The production rate of the bed is solely controlled by the rate of catalyst injection. The productivity of the bed may be increased by simply increasing the rate of catalyst injection and decreased by reducing the rate of catalyst injection.

Since any change in the rate of the catalyst injection will change the rate of generation of the heat of reaction, the temperature of the recycle gas is adjusted upwards or downwards to accommodate the change in rate of heat generation. This insures the maintenance of an essentially constant temperature in the bed. Complete instrumentation of both the fluidized bed and the recycle gas cooling system is, of course, necessary to detect any temperature change in the bed so as to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20 and in suspension with a portion of the gas stream which is vented before the particles settle to preclude further polymerization and sintering when the particles reach their ultimate collection zone. The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 is opened to emit a plug of gas and product to the zone 40 between it and valve 36 which is then closed. Valve 38 is then opened to deliver the product to an external recovery zone. Valve 38 is then closed to await the next product recovery operation.

Finally, the fluidized bed reactor is equipped with an adequate venting system to allow venting the bed during start up and shut down. The reactor does not require the use of stirring means and/or wall scrapping means.

The supported catalyst system of this invention appears to yield a fluid bed product having an average particle size between about 120μm (about 0.005 inches) to about 1500μm (about 0.06 inches) and preferably about 250μm (about 0.01 inches) to about 600μm (about 0.024 inches) wherein supported catalyst residue is unusually low.

The fed stream of gaseous monomer, with or without inert gaseous diluents, is fed into the reactor at a space time yield of about 2 to 10 pounds/hour/cubic foot of bed volume (32 to 160 kg/hr/cubic meter).

EXPERIMENTAL

The following Examples are designed to illustrate the process of the present invention and are not intended as a limitation upon the scope thereof.

The properties of the polymers produced in the Examples were determined by the following test methods:

Density. ASTM D-1505. A plaque is made following ASTM D 1928, Condition C (15°C/min cooling rate), which results in a consistent level of crystallinity in a given material. Measurement for density is then made in a density gradient column; reported as gms/cc.

Melt Index(MI), $I_2$. ASTM D-1238, Condition E. Measured at 190°C. Reported as grams per 10 minutes.

High Load Melt Index (HLMI), $I_{21}$. ASTM D-1238, Condition F. Measured at 190°C, using ten times the weight used in the melt index test above.. Reported as grams per 10 minutes.

Melt Flow Ratio (MFR). MFR = $I_{21}/I_2$.

Swell Properties. In general the swell properties of the polymers produced in the Examples were determined by measuring the manifestation of the parison swell properties as a bottle weight in grams. The procedure to make the bottle was to place the resin in a reciprocating plasticating extruder equipped with a special annular die to form the parison. Once the resin was plasticated, the screw was pushed forward in order to extrude the resin out of the die in a certain fixed time interval of 2 seconds ± 0.1 seconds. The time interval is extremely critical in the development of the parison and for reproducibility. Once the parison is formed two mold halves (which will form a bottle) then close on the parison and the parison is blown up against the cooled mold walls thus forming the bottle. The mold then opens, and the bottle is ejected and trimmed. Then the bottle is weighted to the nearest 0.1 gram.

Weight Swell - Copolymer. Conducted on an Impco B-15 blow molding machine. All bottles are molded at a parison drop time of 2.0 ± 0.1 seconds. The die opening is adjusted to give the Standard Bottle Weight ± 0.1 gram for a calibrant material, DMDA-6200. The test material is then introduced, and the machine is readjusted to a 2.0 second drop time. The measured weight is reported.(The Standard Bottle Weight for the calibrant material is obtained by measuring the weight of a bottle using a die opening which gives a bottle weight of 72.0±1.0 grams with Marlex HHM 5502.)

Weight Swell - Homopolymer. Conducted on an Impco B-15 blow molding machine. All bottles are molded at a parison drop time of 2.0 ± 0.1 seconds. The die opening is adjusted to give the Standard Bottle Weight ± 0.1 gram for a calibrant material, DMDA-6400. The test material is then introduced, and the machine is readjusted to a 2.0 second drop time. The measured weight is reported. (The Standard Bottle Weight for the calibrant material is obtained by measuring the weight of a bottle using a die opening which gives a bottle weight of 72.0±1.0 grams with Marlex EHM 6007.)

Synthesis of Catalyst A

Catalyst A used in the experiments was prepared in the following multi-step procedure:

Step 1: (Drying)---A chromium oxide coated silica (0.5% wt Cr, calculated as chromium) having about 70% of its pore volume in pore size greater than 100 Angstroms (Davison Grade 955) was introduced into a fluid-bed drying vessel maintained under nitrogen ($N_2$) at ambient temperature and pressure. The temperature of the vessel was increased to 150°C at a rate of 50°C/hour. The silica was held at 150°C for 4 hours and cooled to below 100°C for 2 to 3 hours.

Step 2: (Titanation)---190 Kg of the product of Step 1 was charged to a jacketed mixing vessel. For each Kg of the product of Step 1, 5.4 liters of isopentane were added to the contents of the vessel with stirring and increasing the temperature to 55°C. After the temperature reached 55°C, 0.55 liters of 50 wt % tetraisopropyltitanate (TIPT) in hexane were added for each kilogram of the product of Step 1. The vessel is pressurized from atomspheric to 4.1 atmospheres and allowed to mix for 2 hours. The temperature is increased to 100°C and the pressure is reduced to 1.15 atmospheres allowing the isopentane and hexane solvents to evaporate. Two hours after the pressure is released, the mixture is purged through the bottom of the vessel with 18 Kg/hour of nitrogen for 24 hours.

Step 3: (Activation)---Under good fluidization, the product of Step 2 was heated from ambient temperature to 150°C at a rate of 50°C/hour under nitrogen. It was then heated at 150°C for two hours followed by increasing the temperature from 150°C to 325°C at a rate of 50°C/hour in nitrogen. The product was maintained at 325°C for 2 hours in nitrogen and then 1 hour in air. The temperature was increased from 325°C to 825°C at a rate of 100°C/hour in air and maintained at 825°C for 6 hours in air. The temperature was then decreased as fast as possible to 300°C in air. At 300°C, the air was changed to nitrogen, and the temperature was decreased to ambient temperature as fast as possible.

Syntheses of catalysts B, C, 1 and 2 were prepared as in Example 1, with the exceptions as set forth in Table 1.

Catalyst D was a commercially available as Mobil H300, based on Crosfield silica (SD-186) similar to that used in U.S. Patent No. 5,096,868.

TABLE 1: Activation Conditions for the Various Catalyst Used in the Examples

| Catalyst | Silica Support | Activating/ Holding Temperature | Time, hrs | Atmosphere | Cr Content |
|---|---|---|---|---|---|
| A | Davison 955* | 825°C | 6 | Air | 0.5 wt % |
| B | Davison 956† | 825°C | 6 | Air | 0.5 wt % |
| C | Davison 955 | 860°C | 4 | Air | 0.5 wt % |
| 1 | Davison 956 | 860°C | 4 | Air | 0.5 wt % |
| 2 | Davison 956 | 900°C | 6 | Air | 0.5 wt % |
| D | Crosfield Silica SD-186 | -- | -- | -- | -- |

* a chromium oxide coated silica (0.5% Cr, calculated as chromium) having about 70% of its pore volume in pore size greater than 100 Angstroms available as W.R. Grace's Davison Silica Grade 955.

† a chromium oxide coated silica (0.5% Cr, calculated as chromium) having about 70% of its pore volume in pore size greater than 200 Angstroms available as W.R. Grace's Davison Silica Grade 956.

Example 1: Polymerization Reaction

A polymerization reaction was conducted in a fluidized bed pilot scale reactor (0.46 m diameter) as described in the drawing to make a polyethylene homopolymer resin. All of the data were obtained at steady state. The reaction, conditions and results are set forth in Table 2.

After the reactor was brought to the conditions listed, the test catalyst was fed to the reactor. Residence times of the resin in the reactor were approximately 3 hours. Fluidization velocity was 0.46 m/s. Reactor temperature was held at 111.5°C.

For Catalysts A and D, MFR's of 53 were obtained. For Catalyst 1 of the present invention, MFR increased to 60 and the bottle weight decreased to 64.5 grams, lower than obtained with either Catalyst A or D.

TABLE 2

| Homopolymer Resin Data Obtained with Chrome Catalyst at High Pilot Plant Reactor Temperatures | | | | | |
|---|---|---|---|---|---|
| Catalyst | Reaction Temp. °C | Density | Flow Index ($I_{21}$) | MFR | Bottle Weight (Grams) |
| A | 111.5 | 0.962 | 64 | 53 | 66.2 |
| D | 111.5 | 0.962 | 61 | 53 | 69 |
| 1 | 111.5 | 0.962 | 63 | 60 | 64.5 |

Ethylene Partial Pressure      180 psi
Hydrogen Ethylene Molar Ratio      0.35 to 0.61
Oxygen Ethylene Ratio      0.03 ppmv
Hexene Ethylene Molar Ratio      0

Example 2

A polymerization reaction was conducted in a fluidized bed plant reactor (4.4 meters in diameter) as described in the drawing to make 3.8 million pounds of homopolymer resins using Catalyst A. Immediately following the production of this resin, Catalyst 1 was introduced and 2.5 million pounds of additional homopolymer resin were produced. Resin properties were obtained for each 180,000 pound blend. The values shown in Table 3 are the averages for all of the blends made from each catalyst.

Residence times of the resin in the reactor were approximately 3 hours. Fluidization velocity was 0.76 m/s. Reactor temperature was held at 112°C. The other reactor conditions were the following:
Hydrogen Ethylene Ratio      0.32
Hexene Ethylene Ratio      0
Ethylene Partial Pressure      175 psi
Oxygen Ethylene Ratio      0.06 (parts per million volume)

For Catalyst A the average MFR and bottle weight were 65 and 74.3 grams, respectively. For Catalyst 1 of the present invention, MFR's increased to 76 and bottle weights decreased to 72.3 grams.

The MFR and bottle weights obtained with Catalysts A and 1 in the plant run are higher than obtained in the pilot plant (Example 1) because of differences introduced in scaling up the catalyst on the plant activator, differences in the reactor size and pelleting equipment. However, the relative advantages for Catalyst 1 did not change.

TABLE 3

| Homopolymer Resin Data Obtained with Chrome Catalysts at High Plant Reactor Temperatures | | | | | |
|---|---|---|---|---|---|
| Catalyst | Reaction Temp. °C | Density | Flow Index (I21) | MFR | Bottle Weight (Grams) |
| A | 112 | 0.960 | 47.2 | 65 | 74.3 |
| 1 | 112 | 0.960 | 44.2 | 76 | 72.3 |

Example 3

In another series of experiments in a fluidized bed pilot plant reactor (0.46 in. in diameter), homopolymer and ethylene hexene copolymers were made with Catalyst A and Catalyst 2. The reaction, conditions, and results are set forth in Table 4. All of the data were obtained at steady state. The pilot plant reactor was operated in the same manner as described in Example 1.

For all three resins shown in Table 4, resin made with Catalyst 2 had a higher MFR.

EP 0 640 625 A2

## TABLE 4

### Homopolymer and Copolymer Resin Data Obtained with Chrome Catalysts at the Highest Operable Reactor Temperatures

| Catalyst | Density[1] | Reactor Temp. °C | Flow Index ($I_{21}$) | MFR | Hexene Ethylene Molar Ratio | Hydrogen Ethylene Molar Ratio |
|---|---|---|---|---|---|---|
| A | 0.959 | 110.5 | 51 | 54 | 0 | 0.30 |
| 2 | 0.959 | 110.5 | 55 | 59 | 0 | 0.30 |
| A | 0.953 | 107 | 40 | 67 | 0.0015 | 0.10 |
| 2 | 0.953 | 107 | 39 | 73 | 0.0013 | 0.10 |
| A | 0.945 | 103 | 22 | 90 | 0.0050 | 0.01 |
| 2 | 0.945 | 103 | 17 | 103 | 0.0050 | 0.01 |

Ethylene Partial Pressure    170-200 psia

Oxygen Addback    none

Example 4

Three million pounds of an ethylene hexene copolymer having a 0.953 density were successfully made in a fluidized bed plant reactor (4.4 meters in diameter) at reactor temperatures of 110.5°C using Catalyst 1. The other reactor conditions were the following:

Hydrogen Ethylene Ratio          0.26 to 0.35
Hexene Ethylene Ratio            0.0015
Ethylene Partial Pressure        160-260 psi
Oxygen Ethylene Ratio            0.060 ppmv
Residence time in Reactor        Three hours

The resulting product had an average MFR of 83.4, bottle weight of 69.1 grams, and flow index ($I_{21}$) of 35.2. With Catalyst A used in previous runs, reactor temperature had to be kept at 107°C in order to keep the MFR of the resin within a range of 70 to 80. At these conditions, bottle weight averaged 4 grams higher which was too high for the customer's equipment.

Example 5

Catalyst C was compared in a pilot plant reactor with Catalyst 1. The same operating conditions and procedures as described in Example 1 were followed.

As can be seen in Table 5, the die swell (bottle weight) of the homopolymer resin obtained with Catalyst C was significantly higher than that of the homopolymer resin made with Catalyst 1. Because of this and because the pores of the support of Catalyst C will collapse at 900°C, no chrome catalyst based on this silica support was activated at 900°C for comparisons with 956 silica. In addition, further work with the silica support at activation temperatures of 860°C or higher was stopped.

TABLE 5

| Homopolymer Resin Data Obtained with Chrome Catalysts Activated at 860°C | | | | |
|---|---|---|---|---|
| Catalyst | Reaction Temp. °C | Density | Flow Index ($I_{21}$) | Bottle Weight (Grams) |
| C | 111.5 | 0.962 | 61 | 70 |
| 1 | 111.5 | 0.962 | 63 | 64.5 |

**Claims**

1.  A substantially spherical catalyst useful for olefin polymerization which comprises a catalytically active chromium-titanium complex supported on a refractory oxide material in which at least seventy percent of the total pore volume of such material ranges from about 200 to about 500 Angstroms, which supported complex has been activated by heating in the presence of oxygen at a temperature ranging from about 850°C to the sintering temperature of the supported complex.

2.  A catalyst as claimed in claim 1 wherein the catalyst has a particle size distribution within the range of 2 to 80 microns and is activated at a temperature ranging from about 855°C to about 900°C for up to 6 hours.

3.  A catalyst as claimed in claim 1 or claim 2 wherein the refractory oxide material is silica; the amount of chromium in the catalyst composition after activation ranges from about 0.10 to 0.50 weight percent based upon the total weight of the catalyst and wherein at least a portion of the chromium is in the hexavalent valence state.

4.  A catalyst as claimed in any one of claims 1 to 3 wherein the refractory oxide material has at least 75% of its pore volume in the pore size range of about 200 to about 500 Angstroms and the activating temperature ranges from about 860°C to about 880°C.

5.  A method of preparing a substantially spherical catalyst useful for the polymerization of olefins, which comprises:

(a) depositing a chromium compound and a titanium compound on a refractory oxide material in which at least 70% of the total pore volume ranges from about 200 to about 500 Angstoms;

(b) activating the product of step (a) in the presence of oxygen at a temperature ranging from about 850°C to the sintering temperature of the supported catalyst for up to 6 hours.

6. A method as claimed in claim 5 wherein the catalyst has a particle size distribution within the range of 2 to 80 microns, the refractory oxide material is silica, and the amount of chromium in the catalyst composition after activation ranges from about 0.10 to 0.50 weight percent based upon the weight of the catalyst and wherein at least a portion of the chromium is in the hexavalent valence state.

7. A method as claimed in claim 5 or claim 6 wherein at least 75% of its pore volume of said refractory oxide material is of a pore size ranging from about 200 to about 500 Angstroms and the activating temperature for the catalyst ranges from about 860°C to about 880°C for 4 to 6 hours.

8. A method for producing olefin polymers which comprises reacting ethylene and optionally one or more higher alpha-olefins in the presence of a catalyst as claimed in any one of claims 1 to 4.

9. A method as claimed in claim 8 wherein the polymerization is conducted at a temperature ranging from about 110°C to about 115°C.

10. A method as claimed in claim 8 or claim 9 wherein the catalyst (a) has a particle size distribution within the range of 2 to 80 microns, (b) is activated at a temperature ranging from about 855°C to about 900°C for up to 6 hours, (c) the refractory oxide material is silica, and (d) the amount of chromium in the supported catalyst after activation ranges from about 0.10 to 0.50 weight percent based upon the total weight of the catalyst and wherein at least a portion of the chromium is in the hexavalent valence state.

GAS RECYCLE

16

22

14

32

30

10

12

34

TIMER

20

38

GAS FEED

18

36

40

24

PRODUCT

28

26